# EUROPÄISCHE PATENTANMELDUNG

(11) **EP 0 565 181 A1**
(43) Veröffentlichungstag der Anmeldung: **13.10.1993**
(21) Anmeldenummer: 93200938.4
(22) Anmeldetag: 01.04.1993
(51) Int. Cl.: H04M 1/03, H04R 9/10

(54) **Dynamische Hörerkapsel für einen Telefonhörer**

(30) Priorität: 09.04.1992 AT 753/92
(71) Anmelder: Philips Electronics N.V., 5621 BA Eindhoven (NL)
(72) Erfinder: Althuber, Horst, NL-5656 AA Eindhoven (NL); Frasl, Ewald, NL-5656 AA Eindhoven (NL); Renner, Heinz, NL-5656 AA Eindhoven (NL); Struggl, Franz, NL-5656 AA Eindhoven (NL)
(74) Vertreter: Cuppens, Hubertus Martinus Maria

(57) **Zusammenfassung**

Eine dynamische Hörerkapsel (1) für einen Telefonhörer weist eine Membran (5), ein Magnetsystem (11) mit einem ringförmigen Luftspalt (17), eine in dem Luftspalt (17) angeordnete Schwingspule (18) und eine mit der Schwingspule (18) zusammengeschaltete Zusatzspule (20) auf, mit der ein Streufeld zur induktiven Ankopplung der Hörerkapsel (1) an ein Hörgerät erzeugbar ist. Dabei ist die Zusatzspule (20) an das der Membran (5) zugewandten Ende (21) der Schwingspule (18) angrenzend angeordnet und zur Schwingspule (18) elektrisch in Serie geschaltet.

## Beschreibung

Die Erfindung bezieht sich auf eine dynamische Hörerkapsel für einen Telefonhörer, die zum Zusammenwirken mit einem Hörgerät geeignet ist, mit einer bezüglich einer Achse symmetrischen Membran, mit einem zu der Achse koaxial angeordneten Magnetsystem, das einen zylinderförmigen Jochteil und einen einen Abschnitt des zylinderförmigen Jochteiles umrandenden ringförmigen Jochteil aufweist, wobei zwischen diesen beiden Jochteilen ein ringförmiger Luftspalt vorgesehen ist, mit einer in dem Luftspalt angeordneten, mit dem Magnetsystem zusammenwirkenden, mit der Membran verbundenen, im wesentlichen ringförmigen Schwingspule und mit einer zur Schwingspule im wesentlichen koaxial und in Richtung der Achse versetzt angeordneten, im wesentlichen ringförmigen Zusatzspule, durch die ein zu einem durch die Schwingspule fließenden Strom proportionaler Strom leitbar ist und mit der ein Streufeld zur induktiven Ankopplung an das Hörgerät erzeugbar ist.

Eine dynamische Hörerkapsel gemäß der in dem vorstehenden ersten Absatz angeführten Gattung ist beispielsweise aus der DE 34 43 907 A1 bekannt. Bei dieser bekannten Hörerkapsel ist die Zusatzspule zur Erzeugung des Streufeldes zur induktiven Ankopplung an ein Hörgerät im äußeren Bereich eines Hauptkörpers der Hörerkapsel angeordnet, wobei dieser Hauptkörper zusätzlich zu seiner Funktion als Träger für die Zusatzspule auch zum Tragen des Magnetsystems und der Membran dient. Bei der bekannten Hörerkapsel weist die Zusatzspule einen relativ großen Durchmesser im Verhältnis zum Hauptkörper auf, was nachteiligerweise einen relativ großen Durchmesser der gesamten Hörerkapsel zur Folge hat, was wiederum im Hinblick auf einen möglichst geringen Raumbedarf der Hörerkapsel in einem Telefonhörer ungünstig ist. Infolge der Ausbildung der Zusatzspule mit einem großen Durchmesser kann die Zusatzspule nur ein relativ großräumiges Streufeld erzeugen. Um in einem solchen großräumigen Streufeld eine für eine einwandfreie Ankopplung an ein Hörgerät ausreichend große Feldstärke zu erreichen, muß daher einer solchen Zusatzspule eine relativ hohe Leistung zugeführt werden, was aber hinsichtlich des Erreichens einer möglichst hohen Empfindlichkeit der Hörerkapsel nachteilig ist. Bei der bekannten Hörerkapsel ist weiters die Zusatzspule zu der Schwingspule elektrisch parallel geschaltet. Um dabei für eine möglichst geringe zusätzliche Belastung einer Speiseschaltung für die Schwingspule durch die Zusatzspule zu sorgen, muß daher in diesem Fall die Zusatzspule einen hohen Widerstandswert aufweisen, weshalb die Zusatzspule aus einem dünnen Draht gewickelt sein muß. Ein solcher dünner Draht ist aber schlecht zu kontaktieren und beim Kontaktieren beschädigungsanfällig und daher weniger zuverlässig.

Die Erfindung hat sich zur Aufgabe gestellt, die vorstehend angeführten Schwierigkeiten zu vermeiden und bei einer Hörerkapsel der im ersten Absatz angeführten Gattung zu erreichen, daß das Vorsehen der Zusatzspule praktisch keinen zusätzlichen Raumbedarf erfordert, so daß die Hörerkapsel mit einem möglichst kleinen Durchmesser ausgebildet werden kann, daß die Zusatzspule ein möglichst konzentriertes Streufeld erzeugt und hiefür mit einer relativ geringen Leistung das Auslangen gefunden wird und daß die Zusatzspule leicht, einfach und problemlos kontaktiert werden kann. Hiefür ist die Erfindung dadurch gekennzeichnet, daß die Zusatzspule an das der Membran zugewandte Ende der Schwingspule angrenzend angeordnet ist und daß die Zusatzspule und die Schwingspule elektrisch in Serie geschaltet sind. Auf diese Weise ist erreicht, daß die Zusatzspule sich im wesentlichen im Übergangsbereich zwischen der Schwingspule und der Membran befindet und folglich keinen zusätzlichen Raumbedarf im Außenbereich der Hörerkapsel in Anspruch nimmt, was im Hinblick auf eine möglichst raumsparende Ausbildung der gesamten Hörerkapsel vorteilhaft ist. Weiters ist hiedurch erreicht, daß die Schwingspule die Bildung des von der Zusatzspule erzeugten Streufeldes unterstützt, so daß trotz einer relativ kleinen Zusatzspule ein kräftiges und gut fokussiertes Streufeld erhalten wird, wobei mit einem geringen Leistungsbedarf zur Streufelderzeugung das Auslangen gefunden wird. Weiters ist durch die Serienschaltung der Zusatzspule zu der Schwingspule erreicht, daß die Zusatzspule aus keinem besonders dünnen Draht gewickelt werden muß, sondern aus einem relativ dicken Draht bestehen kann, so daß das Kontaktieren der Zusatzspule problemlos und störunanfällig durchgeführt werden kann.

Die Zusatzspule und die Schwingspule können aus leitenden Folien oder aus zwei Drähten mit unterschiedlichen Durchmessern gewickelt sein. Als besonders vorteilhaft hat sich jedoch erwiesen, wenn die Zusatzspule und die Schwingspule je aus Draht mit demselben Durchmesser gewickelt sind. Auf diese Weise ist erreicht, daß sowohl die Zusatzspule als auch die Schwingspule mit Hilfe desselben Drahtmaterials hergestellt werden können, was einfach und billig ist.

Zur Anpassung an bauliche Gegebenheiten einer Hörerkapsel können die Zusatzspule und die Schwingspule beispielsweise unterschiedliche Durchmesser aufweisen. Als vorteilhaft hat sich aber erwiesen, wenn die Zusatzspule und die Schwingspule im wesentlichen denselben Durchmesser aufweisen. Auf diese Weise ist erreicht, daß sowohl die Zusatzspule als auch die Schwingspule unter Zuhilfenahme desselben Wickeldornes gewickelt werden können.

Als besonders vorteilhaft hat sich erwiesen, wenn die Zusatzspule und die Schwingspule übergangslos als eine Spule gewickelt sind. Auf diese Weise ist eine besonders einfache und preiswerte Ausbildung erhalten.

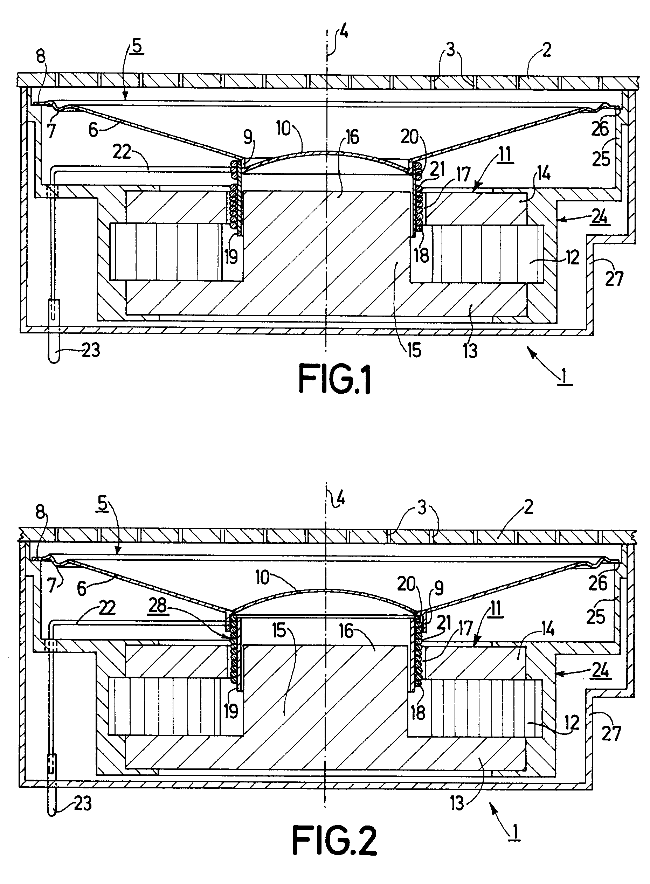

Die Erfindung wird im folgenden anhand von zwei in der Zeichnung dargestellten Ausführungsbeispielen näher beschrieben, auf die die Erfindung jedoch nicht beschränkt sein soll. Die Fig. 1 zeigt in einem Querschnitt etwa in vierfacher Vergrößerung gegenüber der natürlichen Größe schematisch eine Hörerkapsel gemäß" einem ersten Ausführungsbeispiel, bei der eine Zusatzspule zur Erzeugung eines Streufeldes gegenüber der Schwingspule etwas in axialer Richtung abgesetzt angeordnet ist. Die Fig. 2 zeigt auf analoge Weise wie die Fig. 1 eine Hörerkapsel gemäß einem zweiten Ausführungsbeispiel, bei dem die Zusatzspule und die Schwingspule übergangslos als eine Spule gewickelt sind.

Die Fig. 1 zeigt eine dynamische Hörerkapsel 1, die unter einer Gehäusewand 2 eines nicht dargestellten Telefonhörers angeordnet ist. In der Gehäusewand 2 sind eine Vielzahl von Löchhern 3 als Schalldurchtrittsöffnungen vorgesehen. Die Hörerkapsel 1 ist zum Zusammenwirken mit einem ebenfalls nicht dargestellten Hörgerät geeignet.

Die Hörerkapsel 1 weist eine bezüglich einer Achse 4 rotationssymmetrisch ausgebildete Membran 5 auf, die aus Kunststoff hergestellt ist. Die Membran 5 besteht im wesentlichen aus einem Trichterteil 6, der an seinem freien Ende mit einer Sicke 7 versehen ist, die ihrerseits in einen kreisringförmigen Randteil 8 übergeht. In ihrem inneren Bereich weist die Membran 5 einen von dem Trichterteil 6 in Richtung der Achse 4 abstehenden zylindrischen Halsteil 9 auf, der an seinem vom Trichterteil 6 abgewandten Ende mit einem Kuppenteil 10 abgeschlossen ist, der als Staubschutz dient. Anstatt eines kreisförmigen Querschnittes kann die Membran auch einen ovalen Querschnitt aufweisen.

Die Hörerkapsel 1 weist weiters ein zu der Achse 4 koaxial angeordnetes Magnetsystem 11 auf. Das Magnetsystem 11 enthält einen in axialer Richtung magnetisierten Dauermagneten 12, der zwischen einem kreisscheibenförmigen Jochteil 13 und einem ringförmigen Jochteil 14 liegt. Mit dem kreisscheibenförmigen Jochteil 13 ist ein zylinderförmiger Jochteil 15 einstückig verbunden, dessen Endabschnitt 16 von dem ringförmigen Jochteil 14 umrandet ist, wobei zwischen dem zylinderförmigen Jochteil 15 bzw. dessen Endabschnitt 16 und dem ringförmigen Jochteil 14 ein ringförmiger Luftspalt 17 vorgesehen ist.

In dem Luftspalt 17 ist eine im wesentlichen ringförmige bzw. zylindrische Schwingspule 18 angeordnet, die an einem aus Papier bestehenden Spulenträger 19 mit Hilfe eines härtenden Lackes befestigt ist. Die Schwingspule 18 wirkt mit dem Magnetsystem 11 zusammen und ist über den Spulenträger 19 mit der Membran 5 verbunden, indem der Spulenträger 19 an dem Halsteil 9 der Membran 5 festgeklebt ist.

Die Hörerkapsel 1 weist weiters eine zur Schwingspule 18 im wesentlichen koaxial und in Richtung der Achse 4 versetzt angeordnete, im wesentlichen ringförmige bzw. zylinderförmige Zusatzspule 20 auf, die ebenso wie die Schwingspule 18 an dem Spulenträger 19 mit Hilfe eines härtenden Lackes befestigt ist. Durch die Zusatzspule 20 ist ein zu einem durch die Schwingspule 18 fließenden Strom proportionaler Strom leitbar und mit der Zusatzspule 20 ist ein Streufeld zur induktiven Ankopplung an ein Hörgerät erzeugbar. Das erzeugte Streufeld reicht dabei durch die Gehäusewand 2 des Telefonhörers ausreichend weit hindurch, um eine einwandfreie Ankopplung an ein Hörgerät zu erreichen.

Die Zusatzspule 20 ist auf besonders vorteilhafte Weise an das der Membran 5 zugewandte Ende 21 der Schwingspule 17 angrenzend angeordnet und zusätzlich sind dabei die Zusatzspule 20 und die Schwingspule 18 elektrisch in Serie geschaltet. Weiters sind hiebei die Zusatzspule 20 und die Schwingspule 18 je aus Draht mit demselben Durchmesser gewickelt, im vorliegenden Fall aus demselben Drahtmaterial. Weiters weisen die Zusatzspule 20 und die Schwingspule 18 im wesentlichen denselben Durchmesser auf. Die Drahtverbindungen zwischen der Schwingspule 18 und der Zusatzspule 20 sind in Fig. 1 nicht dargestellt, jedoch ist von den beiden Anschlußdrähten, mit denen die Zusatzspule 20 und die dazu in Serie geschaltete Schwingspule 18 an eine Speiseschaltung anschließbar sind, ein Anschlußdraht 22 dargestellt, der zu einem Anschlußkontakt 23 geführt ist.

In der Praxis sind die Schwingspule 18 und die Zusatzspule 20 mehrlagig, beispielsweise sechslagig, gewickelt, was in Fig. 1 der Einfachheit halber nicht dargestellt ist. Dabei ist es günstig, wenn beim Wickelvorgang zuerst beispielsweise die Schwingspule 18 mit allen ihren Lagen fertiggewickelt wird und anschließend ohne Unterbrechung des Wickelvorganges die Zusatzspule 20 mit allen ihren Lagen fertiggewickelt wird.

Bei der Hörerkapsel 1 sind der Dauermagnet 12 und die Jochteile 13 und 14 in einen in einem Spritzvorgang gebildeten Träger 24 aus Kunststoff eingebettet. Der Träger 24 ist mit einem Topfteil 25 versehen, der in seinem Innenbereich eine Abstufung 26 aufweist, an der der Randteil 8 der Membran 5 mit einer Klebeverbindung befestigt ist. Auf das freie Ende des Topfteiles 25 des Trägers 24 ist ein ebenfalls aus Kunststoff bestehendes Gehäuse 27 aufgeschoben, durch das die Anschlußkontakte 23 hindurchgeführt sind.

Bei der Hörerkapsel gemäß Fig. 1 befindet sich die Zusatzspule im wesentlichen im Übergangsbereich zwischen der Schwingspule und der Membran, so daß die Zusatzspule praktisch keinen zusätzlichen Raumbedarf im Außenbereich der Hörerkapsel in Anspruch nimmt, was im Hinblick auf eine möglichst rausparende Ausbildung der gesamten Hörerkapsel vorteilhaft ist. Durch die bei der Hörerkapsel gemäß Fig. 1 getroffene Anordnung der Zusatzspule in Relation zur Schwingspule ist weiters erreicht, daß die Schwingspule die Bildung des von der Zusatzspule erzeugten Streufeldes unterstützt, so daß trotz einer relativ kleinen Zusatzspule ein kräftiges und gut fokussiertes Streufeld erhalten wird, wobei mit einem geringen Leistungsbedarf zur Streufelderzeugung das Auslangen gefunden wird. Weiters ist bei der Hörerkapsel gemäß Fig. 1 durch die Serienschaltung der Zusatzspule zu der Schwingspule erreicht, daß die Zusatzspule aus einem relativ dicken Draht, im vorliegenden Fall aus demselben Draht wie die Schwingspule, gewickelt werden kann, was im Hinblick auf ein möglichst problemloses und störunanfälliges Kontaktieren der Zusatzspule vorteilhaft ist.

In Fig. 2 ist eine Hörerkapsel 1 dargestellt, deren Ausbildung zu einem erheblichen Teil mit der Ausbildung der Hörerkapsel gemäß Fig. 1 übereinstimmt. Bei der Hörerkapsel 1 gemäß Fig. 2 weist aber die Membran 5 einen Halsteil 9 auf, der gegenüber dem Halsteil der Membran der Hörerkapsel gemäß Fig. 1 einen größeren Durchmesser aufweist und der mit der Außenseite der Zusatzspule 20 durch eine Klebeverbindung verbunden ist.

Ein wesentlicher Unterschied gegenüber der Hörerkapsel gemäß Fig. 1 besteht darin, daß bei der Hörerkapsel gemäß Fig. 2 die Zusatzspule 20 unmittelbar an das Ende 21 der Schwingspule 18 angrenzend angeordnet ist und daß die Zusatzspule 20 und die Schwingspule 18 übergangslos als eine Spule 28 gewickelt sind. Auf diese Weise ist bei der Hörerkapsel gemäß Fig. 2 außer den bei der Hörerkapsel gemäß Fig. 1 erzielten Vorteilen zusätzlich der Vorteil einer besonders einfachen und preiswerten Ausbildung erhalten.

In der Praxis sind auch bei der Hörerkapsel gemäß Fig. 2 die Schwingspule 18 und die Zusatzspule 20 mehrlagig, beispielsweise sechslagig, gewickelt, was in Fig. 2 der Einfachheit halber nicht dargestellt ist. Dabei ist es günstig, wenn in einem ununterbrochenen Wickelvorgang jeweils eine Lage der Schwingspule und unmittelbar nachfolgend eine Lage gleichen Durchmessers der Zusatzspule und unmittelbar nachfolgend eine nächste Lage der Zusatzspule und unmittelbar nachfolgend eine nächste Lage gleichen Durchmessers der Schwingspule gewickelt werden. Dabei sind dann jeweils aufeinanderfolgend eine Lage der Schwingspule, eine Lage der Zusatzspule, eine nächste Lage der Zusatzspule und eine nächste Lage der Schwingspule und so weiter elektrisch in Serie geschaltet.

Bei den beiden vorstehend beschriebenen Ausführungsbeispielen weisen die Zusatzspulen jeweils denselben Durchmesser wie die Schwingspulen auf. Eine Zusatzspule kann aber auch einen vom Durchmesser der mit ihr in Serie geschalteten Schwingspule abweichenden Durchmesser aufweisen, wenn dies aus anderen konstruktiven Gründen vorteilhaft ist. Auch kann eine Zusatzspule aus einem anderen Drahtmaterial gewickelt werden als die mit ihr in Serie geschaltete Schwingspule. Bei den beiden vorstehend beschriebenen Ausführungsbeispielen besteht der Spulenträger, auf dem zusätzlich zur Schwingspule jeweils auch die mit der Schwingspule in Serie geschaltete Zusatzspule sitzt, aus Papier, wobei der Spulenträger aus einer Papierfolie besteht, die in mehreren Lagen gewickelt ist. Der Spulenträger kann aber auch aus Kunststoff bestehen.

## Patentansprüche

1. Dynamische Hörerkapsel 1 für einen Telefonhörer, die zum Zusammenwirken mit einem Hörgerät geeignet ist, mit einer bezüglich einer Achse 4 symmetrischen Membran 5, mit einem zu der Achse 4 koaxial angeordneten Magnetsystem 11, das einen zylinderförmigen Jochteil 15 und einen einen Abschnitt 16 des zylinderförmigen Jochteiles 15 umrandenden ringförmigen Jochteil 14 aufweist, wobei zwischen diesen beiden Jochteilen 14, 15 ein ringförmiger Luftspalt 17 vorgesehen ist, mit einer in dem Luftspalt 17 angeordneten, mit dem Magnetsystem 11 zusammenwirkenden, mit der Membran 5 verbundenen, im wesentlichen ringförmigen Schwingspule 18 und mit einer zur Schwingspule 18 im wesentlichen koaxial und in Richtung der Achse 4 versetzt angeordneten, im wesentlichen ringförmigen Zusatzspule 20, durch die ein zu einem durch die Schwingspule 18 fließenden Strom proportionaler Strom leitbar ist und mit der ein Streufeld zur induktiven Ankopplung an das Hörgerät erzeugbar ist, dadurch gekennzeichnet, daß die Zusatzspule 20 an das der Membran 5 zugewandte Ende 21 der Schwingspule 18 angrenzend angeordnet ist und daß die Zusatzspule 20 und die Schwingspule 18 elektrisch in Serie geschaltet sind.

2. Hörerkapsel nach Anspruch 1 , dadurch gekennzeichnet, daß die Zusatzspule 20 und die Schwingspule 18 je aus Draht mit demselben Durchmesser gewickelt sind. (Fig. 1; 2)

3. Hörerkapsel nach Anspruch 1 oder 2, dadurch gekennzeichnet, daß die Zusatzspule 20 und die Schwingspule 18 im wesentlichen denselben Durchmesser aufweisen. (Fig. 1; 2)

4. Hörerkapsel nach Anspruch 3, dadurch gekennzeichnet, daß die Zusatzspule 20 und die Schwingspule 17 übergangslos als eine Spule 28 gewickelt sind. (Fig. 2)
